# EUROPÄISCHE PATENTSCHRIFT

(11) **EP 2 020 606 B1**
(45) Veröffentlichungstag und Bekanntmachung des Hinweises auf die Patenterteilung: **24.10.2012**
(21) Anmeldenummer: 08013494.3
(22) Anmeldetag: 26.07.2008
(51) Int. Cl.: G01S 19/38

(54) **Funksignalbasierte Positionierungsvorrichtung und funksignalbasiertes Positionierungsverfahren**
Radio signal based positioning device and method
Dispositif de positionnement basé sur les signaux radio et procédé de positionnement basé sur les signaux radio

(30) Priorität: 01.08.2007 DE 102007036498
(43) Veröffentlichungstag der Anmeldung: 04.02.2009
(73) Patentinhaber: Astrium GmbH, 81663 München (DE)
(72) Erfinder: Krüger, Jan M.W., Dr., 80807 München (DE); Trautenberg, Hans L., Dr., 85521 Ottobrunn (DE)
(74) Vertreter: Hummel, Adam

(56) Entgegenhaltungen:
- WO-A1-2004/011957
- US-A1- 2002 163 467

## Beschreibung

Die Erfindung betrifft eine funksignalbasierte Positionierungsvorrichtung gemäß Anspruch 1 sowie ein entsprechendes Positionierungsverfahren gemäß Anspruch 9, die insbesondere zum Einsatz bei Satellitennavigationssystemen geeignet sind.

Satellitensysteme zur weltweiten Navigation (GNSS; GNSS = Global Navigation Satellite System) werden zur Positionsbestimmung und Navigation auf der Erde und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System, ein mit einer zentralen Berechnungsstation verbundenes erdfestes Empfangseinrichtungs-System sowie Nutzungssysteme auf, welche die von den Satelliten per Funk übermittelten Satellitensignale auswerten und nutzen.

Zur Positionierung, also der Positionsbestimmung und/oder Navigation, werden von den Nutzungssystemen Signale von mehreren Satelliten empfangen und ausgewertet. Durch den Einfluss der Atmosphäre können die Signale und insbesondere deren Laufzeiten verändert werden. Dies hat einen störenden Einfluss auf die Positionierungsgenauigkeit.

In der Vergangenheit basierten Positionierungssysteme, wie beispielsweise TRANSIT, auf Dopplermessungen. Diese benötigten auf Grund der langen Messzeiten eine genaue Modellierung der Troposphäre und der Ionosphäre. Deshalb wurden bei der darauf folgenden GNSS Generation Pseudolaufzeitmessungen zur Positionierung verwendet.

Da die derzeitigen Positionierungsmethoden für Integrität von GNNS Systemen Pseudo-Laufzeitmessungen nutzen, benötigen sie eine genaue Modellierung der Ausbreitungsgeschwindigkeit in der Troposphäre und der Ionosphäre.

Die ionosphärischen Laufzeitverzögerungen sind durch eine Zweifrequenzmessung mit guter Genauigkeit messbar. Zur Durchführung der Zweifrequenzmessungen müssen zwei Frequenzen verfügbar sein. Dies führt zu einer verringerten Dienstkontinuität und zu einer verringerten Systemverfügbarkeit.

Eine derzeit schwer zu korrigierende Fehlerkomponente von GNSS Entfernungsmessungen ist die troposphärische Komponente. Diese entsteht insbesondere durch kleinskalige lokale Luftdruck- und Luftfeuchteunterschiede. Der Einfluss auf die Signallaufzeit ist bei der Troposphäre frequenzunabhängig und kann daher nicht wie bei der Ionosphäre über eine Zweifrequenzmessung erfasst werden. Die Troposphäre kann global modelliert werden. Globale troposphärische Modelle weisen jedoch große Modellierungsfehler auf. Diese sind für moderne GNSS Systeme zur größten Fehlerkomponente geworden. Es ist zweifelhaft, ob globale troposphärische Modelle die für Integritätssysteme notwendige Zuverlässigkeit erreichen können. Diese Zuverlässigkeit mag für große Alarmschranken erreichbar sein, stellt jedoch für Systeme mit Alarmschranken in der Größenordnung von 20 m bereits ein ungelöstes Problem dar.

WO2004/011957A1 beschreibt ein Verfahren und eine Vorrichtung zur Positionierung eines Satellitensignalempfängers. Hierzu wird zunächst ein Doppler-Offset für jedes einer Mehrzahl von Satellitensignalen relativ zum Empfänger bestimmt. Dann wird eine Position des Empfängers unter Benutzung des Doppler-Offsets für jedes der Mehrzahl von Satellitensignalen bestimmt.

US2002/01 63 467 A1 offenbart einen Empfänger für ein Satelliten-Positionierungssystem, bei dem eine Dopplerverschiebung von Satellitensignalen genutzt wird, um die relative Geschwindigkeit eines Satelliten aus der Sicht des Empfängers zu bestimmen. Mittels der relativen Geschwindigkeit wird zusammen mit der geschätzten Position eines Satelliten eine vorläufige Position des Empfängers ermittelt werden, die zur Erkennung eines signifikanten Fehlers in der Pseudoentfernung zwischen Empfänger und Satelliten genutzt wird.

Aufgabe der vorliegenden Erfindung ist es nun, eine funksignalbasierte Positionierungsvorrichtung und ein Funksignalbasiertes Positionierungsverfahren vorzuschlagen, mittels denen eine genauere Positionierung möglich ist.

Diese Aufgabe wird durch eine funksignalbasierte Positionierungsvorrichtung gemäß Anspruch 1 sowie ein entsprechendes Positionierungsverfahren gemäß Anspruch 9 gelöst. Bevorzugte Ausgestaltungen der Erfindung ergeben sich aus den abhängigen Ansprüchen.

Ein wesentlicher Gedanke der Erfindung besteht nun darin, eine Positionierung basierend auf den Empfangsfrequenzen und Absendezeitpunkten empfangener und per Funk übertragener Positionierungssignale durchzuführen. Vorteilhafterweise ist dazu keine fehlerträchtige Modellierung der Troposphäre notwendig. Zudem sind keine Zweifrequenzmessungen erforderlich. Dadurch werden Kontinuitäts- und Verfügbarkeitsverluste vermieden. Dies ermöglicht, dass die störenden Eigenschaften der Troposphäre und der Ionosphäre von den Alarmschranken für Integrität nicht mehr berücksichtigen werden müssen und die Alarmschranken somit deutlich kleiner sein können.

Die vorliegende Erfindung betrifft gemäß einer Ausführungsform eine funksignalbasierte Positionierungsvorrichtung mit
- einem Empfänger zum Empfangen einer Mehrzahl von per Funk übertragenen Positionierungssignalen;
- einem Frequenzermittler zum Ermitteln einer Frequenz eines jeden der Mehrzahl von Positionierungssignalen;
- einem Absendezeitpunktermittler zum Ermitteln eines Absendezeitpunktes eines jeden der Mehrzahl von Positionierungssignalen; und
- einer Auswerteeinrichtung die ausgebildet ist, um aus den ermittelten Frequenzen und Absendezeitpunkten der Mehrzahl von Positionierungssignalen eine Positionierung zu bestimmen.
   Die Mehrzahl von Positionierungssignalen kann von Sendern eines Satellitensystems zur weltweiten Navigation aussendbar sein. Dies ermöglicht einen Einsatz der Positionierungsvorrichtung beispielsweise als Nutzungssystem oder Endgerät in einem GNSS System.
   Der Frequenzermittler kann ausgebildet sein, um die Frequenz eines jeden der Mehrzahl von Positionierungssignalen jeweils zu einem Empfangszeitpunkt des entsprechenden Positionierungssignals zu ermitteln. Dadurch lassen sich während der Laufzeit der Positionierungssignale auftretende Frequenzabweichungen mit erfassen.
   Gemäß einer Ausführungsform kann die Positionierungsvorrichtung ferner einen Referenzoszillator zum Bereitstellen einer Referenzfrequenz aufweisen und kann der Frequenzermittler ausgebildet sein, um die Frequenz eines jeden der Mehrzahl von Positionierungssignalen relativ zu der Referenzfrequenz zu bestimmen. Mit dem Referenzoszillator wird eine exakte Frequenzmessung ermöglicht.
   Gemäß einer weiteren Ausführungsform können über die Mehrzahl von Positionierungssignalen Nutzdaten übertragbar sein und der Absendezeitpunktermittler kann ausgebildet sein, um den Absendezeitpunkt eines jeden der Mehrzahl von Positionierungssignalen aus den Nutzdaten des jeweiligen Positionierungssignals zu ermitteln.
   Der Empfänger kann ausgebildet sein, um mehrere Positionierungssignale zu empfangen und die Auswerteeinrichtung kann ausgebildet sein, um die Positionierung aus den ermittelten mehreren zugehörigen Frequenzen und Absendezeitpunkten zu bestimmen. Im Allgemeinen Fall werden sieben Navigationssignale verwendet. Liegt ein Modell der Erdoberfläche vor, dann kommt die Erfindung bereits mit fünf Signalen aus. Bei eindimensionalen Bewegungen, z.B. auf einem Gleis, kommt die Erfindung bereits mit drei Messungen aus.
   Die Erfindung wird im Weiteren für den Fall von sieben Navigationssignalen beschrieben. Dies soll die Erfindung allerdings nicht auf diesen Fall beschränken.
   Die Auswerteeinrichtung kann ausgebildet sein, um eine Position, eine Geschwindigkeit und die Referenzfrequenz zu bestimmen. Dabei handelt es sich im Allgemeinen um eine 3D-Position und eine 3D-Geschwindigkeit. Bei Anwendungen auf die Erdoberfläche mit einem digitalen Geländemodell würde eine z.B. eine 2D-Position und eine 2D-Geschwindigkeit zu bestimmen sein.
   Die Erfindung wird im Weiteren für den 3D-Fall beschrieben. Dies soll die Erfindung allerdings nicht auf diesen Fall beschränken.
   Die vorliegende Erfindung betrifft gemäß einer weiteren Ausführungsform ein System zur Navigation oder Positionsbestimmung mit
- einer Mehrzahl von Sendern die ausgebildet sind, um Positionierungssignale auszusenden; und
- mindestens eine Positionierungsvorrichtung gemäß einer Ausführungsform der vorliegenden Erfindung.

Die vorliegende Erfindung betrifft gemäß einer weiteren Ausführungsform ein funksignalbasiertes Positionierungsverfahren, das folgende Schritte umfasst:
- Empfangen einer Mehrzahl von per Funk übermittelten Positionierungssignalen;
- Ermitteln einer Frequenz eines jeden der Mehrzahl von Positionierungssignalen;
- Ermitteln eines Absendezeitpunktes eines jeden der Mehrzahl von Positionierungssignalen; und
- Bestimmen einer Positionierung aus den ermittelten Frequenzen und Absendezeitpunkten der Mehrzahl von Positionierungssignalen.

Die vorliegende Erfindung betrifft gemäß einer weiteren Ausführungsform ein Computer-Programm zur Durchführung eines Positionierungsverfahren gemäß einer Ausführungsform der vorliegenden Erfindung und ein Computer-Programm-Produkt beinhaltend einen maschinenlesbaren Programmträger, auf dem ein Computer-Programm gemäß einer Ausführungsform der vorliegenden Erfindung in der Form von elektronisch und/oder optischen lesbaren Steuersignalen gespeichert ist.

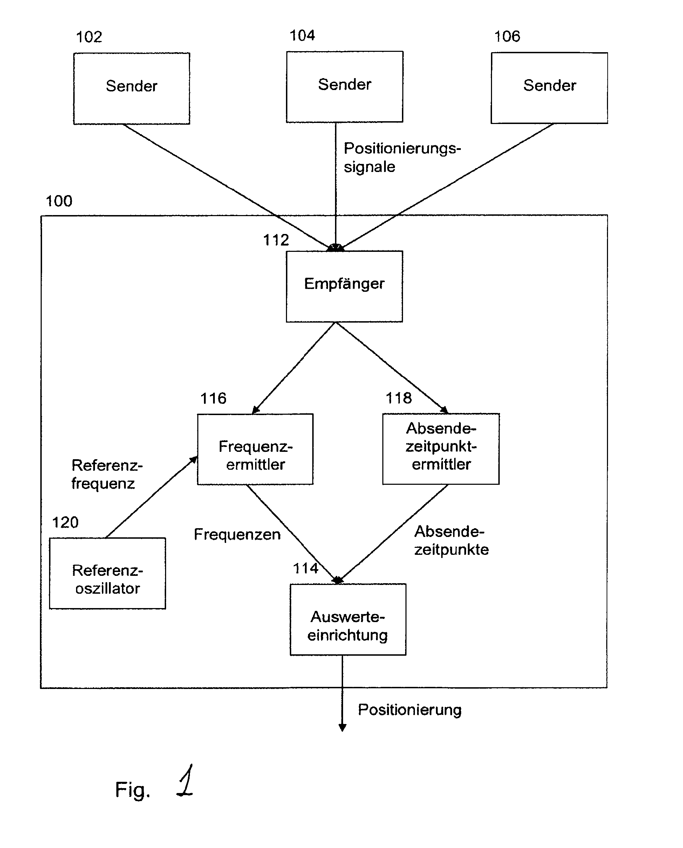

Weitere Vorteile und Anwendungsmöglichkeiten der vorliegenden Erfindung ergeben sich aus der nachfolgenden Beschreibung in Verbindung mit dem in der einzigen Zeichnung dargestellten Ausführungsbeispiel. Die einzige Zeichnung zeigt in der Fig. 1 eine Positioniervorrichtung gemäß einem Ausführungsbeispiel der vorliegenden Erfindung.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

Die Fig. 1 zeigt ein System zur Positionsbestimmung oder Navigation mit einer Positionierungsvorrichtung 100 und Sendern 102, 104, 106, gemäß einem Ausführungsbeispiel der vorliegenden Erfindung. Bei dem System kann es sich um ein GNSS System wie beispielsweise dem Galileo System handeln. In diesem Fall kann es sich bei den Sendern 102, 104, 106 um Satelliten und bei der Positionierungsvorrichtung 100 um ein Endgerät handeln, dass eine Positionierung auf der Erde oder in der Luft ermöglicht. Dazu können die Sender 102, 104, 106 ausgebildet sein, um Positionierungssignale auszusenden. Die Positionierungssignale können von der Positionierungsvorrichtung 100 empfangen und verwendet werden, um eine Positionierung der Positionierungsvorrichtung 100 zu bestimmen und bereitzustellen.

Die Anzahl der Sender 102, 104, 106 ist hier nur beispielhaft dargestellt. Beispielsweise kann es erforderlich sein, dass die Positionierungsvorrichtung 100 zum Zeitpunkt der Positionierung Positionierungssignale von mehr als den drei gezeigten unterschiedlichen Sendern 102, 104, 106 benötigt, um die Positionierung durchführen zu können.

Die Positionierungsvorrichtung 100 weist einen Empfänger 112, eine Auswerteeinrichtung 114, einen Frequenzermittler 116 und einen Absendezeitpunktermittler 118 auf.

Der Empfänger 112 ist ausgebildet, um eine Mehrzahl von Positionierungssignalen zu empfangen. Gemäß dem in Fig. 1 gezeigte Ausführungsbeispiel ist der Empfänger 112 ausgebildet, um von den Sendern 102, 104, 106 jeweils ein Positionierungssignal zu empfangen. Der Empfänger 112 ist ferner ausgebildet, um die empfangen Signale oder zur Auswertung benötigte Bereiche oder Inhalte der empfangenen Signale an den Frequenzermittler 116 und den Absendezeitpunktermittler bereitzustellen.

Der Frequenzermittler 116 ist ausgebildet, um eine Frequenz eines jeden empfangenen Positionierungssignals zu ermitteln. Gemäß diesem Ausführungsbeispiel wird demnach die Frequenz des von dem Sender 102 empfangenen Positionierungssignals, die Frequenz des von dem Sender 104 empfangenen Positionierungssignals und die Frequenz des von dem Sender 106 empfangenen Positionierungssignals ermittelt. Dabei werden diejenigen Frequenzen ermittelt, die die Positionierungssignale jeweils zum Zeitpunkt ihres Empfangs aufweisen. Der Frequenzermittler 116 ist ausgebildet, um die ermittelten Frequenzen an die Auswerteeinrichtung 114 bereitzustellen.

Der Absendezeitpunktermittler 118 ist ausgebildet, um einen Absendezeitpunkt eines jeden der Positionierungssignale zu ermitteln. Gemäß diesem Ausführungsbeispiel wird demnach der Absendezeitpunkt des von dem Sender 102 empfangenen Positionierungssignals, der Absendezeitpunkt des von dem Sender 104 empfangenen Positionierungssignals und der Absendezeitpunkt des von dem Sender 106 empfangenen Positionierungssignals ermittelt. Der Absendezeitpunktermittler 118 ist ausgebildet, um die ermittelten Absendezeitpunkte an die Auswerteeinrichtung 114 bereitzustellen.

Es ist zu beachten, dass der Absendezeitpunktermittler den Absendezeitpunkt nur so genau ermitteln muss, dass der Absendeort mit der notwendigen Genauigkeit aus dem Orbitmodel ermittelt werden kann. Die erforderliche Genauigkeit bei der Bestimmung des Absendezeitpunkts ist also um Größenordnungen weniger genau als bei Lichtlaufzeitmessungen.

Die Auswerteeinrichtung 114 ist ausgebildet, um aus den von dem Frequenzermittler 116 und dem Absendezeitpunktermittler 118 bereitgestellten Frequenzen und Absendezeitpunkten der empfangenen Positionierungssignale die Positionierung zu bestimmen. Dazu kann die Auswerteeinrichtung 114 ausgebildet sein, um einem vorbestimmter Algorithmus auszuführen, mit dem sich die Positionierung aus den bereitgestellten Frequenzen und Absendezeitpunkten bestimmen lässt.

Gemäß einem Ausführungsbeispiel kann der Frequenzermittler 116 ausgebildet sein, um die Frequenzen der empfangenen Positionierungssignale relativ zu einer Referenzfrequenz zu bestimmen und an die Auswerteeinrichtung bereitzustellen. Dazu kann die Positionierungsvorrichtung 100 einen Referenzoszillator 120 aufweisen, der ausgebildet ist, um die Referenzfrequenz an den Frequenzermittler 116 bereitzustellen.

Gemäß einem weiteren Ausführungsbeispiel können die von den Sendern 102, 104, 106 übertragenen Positionierungssignale Träger von Nutzdaten sein. In die übertragenen Nutzdaten kann der jeweilige Absendezeitpunkt eines Positionierungssignals eingebettet sein und der Absendezeitpunktermittler 118 kann ausgebildet sein, um die Absendezeitpunkte aus den Nutzdaten der jeweiligen Positionierungssignale zu ermitteln.

Gemäß einem Ausführungsbeispiel wird die Positionierung basierend auf sieben Positionierungssignalen durchgeführt, die von sieben unterschiedlichen Sendern (in Fig. 1 sind lediglich drei Sender gezeigt) stammen. Dazu ist der Empfänger 112 ausgebildet, um die sieben Positionierungssignale von den sieben unterschiedlichen Sendern zu empfangen. Der Frequenzermittler 116 und der Absendezeitpunktermittler 118 sind demgemäß ausgebildet, um die entsprechenden sieben Frequenzen, relativ zu einer lokalen Referenzfrequenz, und Absendezeitpunkte zu ermitteln und an die Auswerteeinrichtung 114 bereitzustellen. Die Auswerteeinrichtung 114 ist ausgebildet, um die Positionierung aus den sieben bereitgestellten Frequenzen und Absendezeitpunkten zu bestimmen. Für die Positionierung kann dabei von der Auswerteeinrichtung 114 in Bezug auf die Positionierungsvorrichtung 100 eine 3D-Position, eine 3D-Geschwindigkei und die Referenzfrequenz bestimmt werden.

Mit anderen Worten ausgedrückt können relativ zu einem lokalen Referenzoszillator die Frequenzen der empfangenen GNSS Signale ermittelt werden. Zusätzlich kann aus einem Datenstrom eines jeden einzelnen GNSS Signals der Absendezeitpunkt des Signals, dessen augenblickliche Empfangsfrequenz gemessen wird, ermittelt werden.

In einem solchen System sind für eine Positionierung sieben unbekannte Variable zu ermitteln, nämlich die 3D-Position, die 3D-Geschwindigkei und die Referenzfrequenz. Das bedeutet, dass mindestens Messungen zu sieben Satelliten notwendig sind. Die empfangene Frequenz wird von der Troposphäre und der Ionosphäre nur durch Laufzeitveränderungen während der Messung beeinflusst. Bei genügend kurzer Messzeit ist dieser Einfluss so kontrollierbar klein, dass er nicht mehr die größte Fehlerquelle darstellt.

In den beschriebenen Positionierungsvorrichtungen ausgeführte Positionierungsverfahren können in Form eines Computerprogramms an die Positionierungsvorrichtungen bereitgestellt werden und von diesen ausgeführt werden.

Die einzelnen Ausführungsbeispiele sind beispielhaft beschrieben und können abhängig von möglichen Einsatzumgebungen angepasst und sofern zweckmäßig auch miteinander kombiniert werden. Insbesondere können die eingesetzten Sender und die Anzahl und Ausgestaltung der verwendeten Positionierungssignale an das jeweilige GNSS System angepasst werden, in dem die erfindungsgemäße Positionierungsvorrichtung oder das erfindungsgemäße Positionierungsverfahren Verwendung finden. So ist es beispielsweise möglich, dass nicht alle empfangenen Positionierungssignale auch zur Bestimmung der Positionierung verwendet werden.

## Patentansprüche

1. Funksignalbasierte Positionierungsvorrichtung (100) zum Einsatz mit einem globalen Satellitennavigationssystem mit
- einem Empfänger (112) zum Empfangen von sieben per Funk übertragenen Positionierungssignalen von sieben unterschiedlichen Sendern des globalen Satellitennavigationssystems;
- einem Frequenzermittler (116) zum Ermitteln einer Frequenz eines jeden der sieben Positionierungssignale relativ zu einer lokalen Referenzfrequenz;
- einem Absendezeitpunktermittler (118) zum Ermitteln eines Absendezeitpunktes eines jeden der sieben Positionierungssignale; und
- einer Auswerteeinrichtung (114) die ausgebildet ist, um aus sieben ermittelten Frequenzen und Absendezeitpunkten der sieben Positionierungssignale basierend auf Pseudolaufzeiten der Positionierungssignale eine Positionierung am Empfangsort der sieben Positionierungssignale zu bestimmen, wobei für jedes Positionierungssignal anhand des ermittelten Absendezeitpunkts der Absendeort mit der notwendigen Genauigkeit aus dem Orbitmodel des Senders des Positionierungssignals ermittelt wird.

2. Positionierungsvorrichtung gemäß Anspruch 1, wobei der Frequenzermittler (116) ausgebildet ist, um die Frequenz eines jeden der Mehrzahl von Positionierungssignalen jeweils zu einem Empfangszeitpunkt des entsprechenden Positionierungssignals zu ermitteln.

3. Positionierungsvorrichtung gemäß einem der vorangegangenen Ansprüche, die ferner einen Referenzoszillator (120) zum Bereitstellen einer Referenzfrequenz aufweist, wobei der Frequenzermittler (116) ausgebildet ist, um die Frequenz eines jeden der Mehrzahl von Positionierungssignalen relativ zu der Referenzfrequenz zu bestimmen.

4. Positionierungsvorrichtung gemäß einem der vorangegangenen Ansprüche, wobei über die Mehrzahl von Positionierungssignalen Nutzdaten übertragbar sind und wobei der Absendezeitpunktermittler (118) ausgebildet ist, um den Absendezeitpunkt eines jeden der Mehrzahl von Positionierungssignalen aus den Nutzdaten des jeweiligen Positionierungssignals zu ermitteln.

5. Positionierungsvorrichtung gemäß einem der vorangegangenen Ansprüche, wobei der Empfänger (112) ausgebildet ist, um mehrere Positionierungssignale zu empfangen und wobei die Auswerteeinrichtung (114) ausgebildet ist, um die Positionierung aus den ermittelten mehreren zugehörigen Frequenzen und Absendezeitpunkten zu bestimmen.

6. Positionierungsvorrichtung gemäß einem der Ansprüche 3 bis 5, wobei die Auswerteeinrichtung (114) ausgebildet ist, um eine Position, eine Geschwindigkeit und die Referenzfrequenz in Bezug auf die Positionierungsvorrichtung zu bestimmen.

7. Globales Satellitennavigationssystem mit
- einer Mehrzahl von Sendern (102, 104, 106) die ausgebildet sind, um per Funk Positionierungssignale auszusenden; und
- mindestens einer Positionierungsvorrichtung (100) gemäß einem der vorangegangenen Ansprüche.

8. Funksignalbasiertes Positionierungsverfahren zum Einsatz mit einem globalen Satellitennavigationssystem, das folgende Schritte umfasst:
- Empfangen von sieben per Funk übertragenen Positionierungssignalen von sieben unterschiedlichen Sendern des globalen Satellitennavigationssystems;
- Ermitteln einer Frequenz eines jeden der sieben Positionierungssignale, in Bezug auf eine lokale Referenzfrequenz;
- Ermitteln eines Absendezeitpunktes eines jeden der sieben Positionierungssignale; und
- Bestimmen einer Positionierung am Empfangsort der sieben Positionierungssignale aus den sieben ermittelten Frequenzen und Absendezeitpunkten der sieben Positionierungssignale basierend auf Pseudolaufzeiten der Positionierungssignale, wobei für jedes Positionierungssignal anhand des ermittelten Absendezeitpunkts der Absendeort mit der notwendigen Genauigkeit aus dem Orbitmodel des Senders des Positionierungssignals ermittelt wird.

9. Computer-Programm zur Durchführung des Verfahrens gemäß Anspruch 8.

10. Computer-Programm-Produkt beinhaltend einen maschinenlesbaren Programmträger, auf dem ein Computer-Programm gemäß Anspruch 9 in der Form von elektronisch und/oder optischen lesbaren Steuersignalen gespeichert ist.

## Claims

1. Radio-signal-based positioning apparatus (100) for use with a global satellite navigation system having
- a receiver (112) for receiving seven positioning signals transmitted by radio from seven different transmitters in the global satellite navigation system;
- a frequency ascertainment unit (116) for ascertaining a frequency for each of the seven positioning signals relative to a local reference frequency;
- a sending time ascertainment unit (118) for ascertaining a sending time for each of the seven positioning signals; and
- an evaluation device (114) which is designed to determine a positioning at the reception location of the seven positioning signals from seven ascertained frequencies and sending times for the seven positioning signals on the basis of pseudo delay times for the positioning signals, wherein for each positioning signal the ascertained sending time is used to ascertain the sending location with the necessary accuracy from the orbit model of the transmitter of the positioning signal.

2. Positioning apparatus according to Claim 1, wherein the frequency ascertainment unit (116) is designed to ascertain the frequency of each of the plurality of positioning signals at a respective reception time for the relevant positioning signal.

3. Positioning apparatus according to either of the preceding claims, which also has a reference oscillator (120) for providing a reference frequency, wherein the frequency ascertainment unit (116) is designed to determine the frequency of each of the plurality of positioning signals relative to the reference frequency.

4. Positioning apparatus according to one of the preceding claims, wherein the plurality of positioning signals can be used to transmit useful data and wherein the sending time ascertainment unit (118) is designed to ascertain the sending time for each of the plurality of positioning signals from the useful data in the respective positioning signal.

5. Positioning apparatus according to one of the preceding claims, wherein the receiver (112) is designed to receive a plurality of positioning signals and wherein the evaluation device (114) is designed to determine the positioning from the ascertained plurality of associated frequencies and sending times.

6. Positioning apparatus according to one of Claims 3 to 5, wherein the evaluation device (114) is designed to determine a position, a speed and the reference frequency in relation to the positioning apparatus.

7. Global satellite navigation system having
- a plurality of transmitters (102, 104, 106) which are designed to emit positioning signals by radio; and
- at least one positioning apparatus (100) according to one of the preceding claims.

8. Radio-signal-based positioning method for use with a global satellite navigation system, which comprises the following steps:
- seven positioning signals transmitted by radio are received from seven different transmitters in the global satellite navigation system;
- a frequency for each of the seven positioning signals is ascertained in relation to a local reference frequency;
- a sending time for each of the seven positioning signals is ascertained; and
- a positioning at the reception location of the seven positioning signals is determined from the seven ascertained frequencies and sending times for the seven positioning signals on the basis of pseudo delay times for the positioning signals, wherein for each positioning signal the ascertained sending time is used to ascertain the sending location with the necessary accuracy from the orbit model of the transmitter of the positioning signal.

9. Computer program for carrying out the method according to Claim 8.

10. Computer program product containing a machine-readable program medium which stores a computer program according to Claim 9 in the form of electronically and/or optically readable control signals.

## Revendications

1. Dispositif de positionnement à base de signaux radio (100) destiné à être utilisé avec un système global de navigation par satellite comprenant :
- un récepteur (112) destiné à recevoir sept signaux de positionnement transmis par radio de sept émetteurs différents du système global de navigation par satellite ;
- un dispositif de détermination de fréquence (116) destiné à déterminer une fréquence de chacun des sept signaux de positionnement par rapport à une fréquence de référence locale ;
- un dispositif de détermination d'instant d'émission (118) destiné à déterminer un instant d'émission de chacun des sept signaux de positionnement ; et
- un dispositif d'évaluation (114) qui est conçu pour déterminer à partir de sept fréquences et de sept instants d'émission déterminés des signaux de positionnement sur la base de pseudo-temps de parcours des signaux de positionnement, un positionnement du lieu de réception des sept signaux de positionnement, dans lequel, pour chaque signal de positionnement, le lieu d'émission est déterminé avec la précision nécessaire sur la base de l'instant d'émission déterminé à partir du modèle d'orbite de l'émetteur du système de positionnement.

2. Dispositif de positionnement selon la revendication 1, dans lequel le dispositif de détermination de fréquence (116) est conçu pour déterminer la fréquence de chacun de la pluralité de signaux de positionnement à un instant de réception respectif du signal de positionnement correspondant.

3. Dispositif de positionnement selon l'une quelconque des revendications précédentes, comprenant en outre un oscillateur de référence (120) destiné à fournir une fréquence de référence, dans lequel le dispositif de détermination de fréquence (116) est conçu pour déterminer la fréquence de l'un particulier de la pluralité de signaux de positionnement par rapport à la fréquence de référence.

4. Dispositif de positionnement selon l'une quelconque des revendications précédentes, dans lequel des données utiles peuvent être transmises par l'intermédiaire de la pluralité de signaux de positionnement et dans lequel le dispositif de détermination d'instant d'émission (118) est conçu pour déterminer l'instant d'émission de chacun de la pluralité de signaux de positionnement à partir des données utiles du signal de positionnement respectif.

5. Dispositif de positionnement selon l'une quelconque des revendications précédentes, dans lequel le récepteur (112) est conçu pour recevoir une pluralité de signaux de positionnement, et dans lequel le dispositif d'évaluation (114) est conçu pour déterminer le positionnement à partir de la pluralité déterminée de fréquences et d'instants d'émission associés.

6. Dispositif de positionnement selon l'une quelconque des revendications 3 à 5, dans lequel le dispositif d'évaluation (114) est conçu pour déterminer une position, une vitesse et la fréquence de référence par rapport au dispositif de positionnement.

7. Système global de navigation par satellite, comprenant :
- une pluralité d'émetteurs (102, 104, 106) conçus pour émettre des signaux de positionnement par radio ; et
- au moins un dispositif de positionnement (100) selon l'une quelconque des revendications précédentes.

8. Procédé de positionnement à base de signaux radio destiné à être utilisé avec un système global de navigation par satellite, comprenant les étapes suivantes :
- réception de sept signaux de positionnement transmis par radio par sept émetteurs différents du système global de navigation par satellite ;
- détermination d'une fréquence de chacun des sept signaux de positionnement, par rapport à une fréquence de référence locale ;
- détermination d'une fréquence de chacun des sept signaux de positionnement par rapport à une fréquence de référence locale ; et
- détermination d'un instant d'émission de chacun des sept signaux de positionnement ; et
- détermination d'un positionnement du lieu de réception des sept signaux de positionnement à partir des sept fréquences et instants d'émission déterminés des sept signaux de positionnement sur la base de pseudo-temps de parcours des signaux de positionnement, dans lequel, pour chaque signal de positionnement, le lieu d'émission est déterminé avec la précision nécessaire à partir du modèle d'orbite de l'émetteur du signal de positionnement sur la base de l'instant d'émission déterminé.

9. Programme informatique destiné à mettre en oeuvre le procédé selon la revendication 8.

10. Produit de programme informatique comprenant un support de programme lisible par machine sur lequel est stocké un programme informatique selon la revendication 9 sous la forme de signaux de commande lisibles de manière électronique et/ou optique.
